# EUROPEAN PATENT APPLICATION

(11) **EP 4 443 740 A1**
(43) Date of publication of application: **09.10.2024**
(21) Application number: 23861679.1
(22) Date of filing: 08.05.2023
(51) Int. Cl.: H02S 20/23, H02S 30/10, H02S 30/00, E04D 3/36

(54) **PHOTOVOLTAIC PROFILE, PHOTOVOLTAIC ROOF TILE ASSEMBLY AND PHOTOVOLTAIC ROOF MOUNTING SYSTEM**

(30) Priority: 15.02.2023 CN 202310120158
(71) Applicant: Trina Solar Co., Ltd, Changzhou, Jiangsu 213031 (CN)
(72) Inventor: JIANG, Ahua, Changzhou, Jiangsu 213031 (CN); XU, Jianmei, Changzhou, Jiangsu 213031 (CN); XIE, Yifan, Changzhou, Jiangsu 213031 (CN); MAO, Jing, Changzhou, Jiangsu 213031 (CN); TIAN, Guorong, Changzhou, Jiangsu 213031 (CN)
(74) Representative: Nederlandsch Octrooibureau
(86) International application number: PCT/CN2023/092666
(87) International publication number: WO 2024/169055

(57) **Abstract**

The present application provides a photovoltaic profile, a photovoltaic roof tile module and a photovoltaic roof installation system. The photovoltaic profile comprises: a first frame, a second frame, a third frame and a fourth frame, the splicing corners of the frames are connected in sequence, and the splicing angle of the first splicing corner and the third splicing corner are both larger than the splicing angle of the second splicing corner and the fourth corners, and the first drainage channel and the second drainage channel are interconnecting to each other. The photovoltaic profiles, photovoltaic roof tile module and photovoltaic roof installation system of the present application can effectively drain rainwater through the interconnected drainage channels in the photovoltaic frame, avoiding rainwater damage to photovoltaic profiles and photovoltaic module, and improving the reliability of the overall waterproof performance of the roof. In addition, the photovoltaic frames are connected in sequence through splicing corners, and the splicing angles have a special angle design, so that the photovoltaic profile of the present application has the advantage of being simple in structure and easy to process.

## Description

### Technical Field

The present application mainly relates to the fields of photovoltaic technology, and in particular to a photovoltaic profile, a photovoltaic roof tile module and a photovoltaic roof installation system.

### Background

The photovoltaic roof installation system uses multiple overlapping photovoltaic modules to form a photovoltaic power generation system located on the roof. In rainy and snowy weather, there is a problem that rainwater penetrates into the photovoltaic modules through the overlap gaps and into the photovoltaic profiles that fix the photovoltaic modules. In order to avoid this problem, the rainwater should be effectively drained away from the photovoltaic modules and photovoltaic profiles. Although drainage channels on photovoltaic profiles can drain rainwater, current photovoltaic profiles with drainage channels generally have problems such as the inability to effectively drain water seepage from the overlapping gaps between upper and lower roof tiles, and complex processing of module frames.

Therefore, providing a photovoltaic profile and photovoltaic roof installation system having a simple structure and can effectively drain rainwater is an urgent problem to be solved.

### Summary

The technical problem to be solved by the present application is to provide a photovoltaic profile, a photovoltaic roof tile module and a photovoltaic roof installation system having the technical effects of simple structure and effective drainage of rainwater.

In order to solve the above technical problems, the present application provides a photovoltaic profile, comprising: a first frame provided with a first splicing corner at each of two opposite ends along a first direction, and having a first installation position and a first drainage channel opposite to each other along the second direction; a second frame provided with a second splicing corner at each of two opposite ends along the second direction, and having a second installation position and a second drainage channel opposite to each other along the first direction; a third frame provided with a third splicing corners at two opposite ends along the first direction, and having a third installation position facing the first installation position along the second direction; and a fourth frame provided with a fourth splicing corner at each of two opposite ends along the second direction, and having a fourth installation position facing the second installation position along the first direction; and wherein the splicing corners of the frames are connected in sequence, and the splicing angles of the first splicing corner and the third splicing corner are both larger than the splicing angles of the second splicing corner and the fourth splicing corner, and the first drainage channel and the second drainage channel are interconnected to each other.

In one embodiment of the present application, the first frame has a first fixing plate with one end connected to a bottom surface of the first frame and extending away from the first installation position.

In one embodiment of the present application, the first frame has a first overlapping plate, and the third frame has a second overlapping plate, wherein the size of the first overlapping plate along the second direction is equal to the size of the second overlapping plate along the second direction.

In one embodiment of the present application, the fourth frame has a cover plate opposite to the fourth installation position along the first direction, wherein the size of the cover plate along the first direction is equal to that the size of the second drainage channel along the first direction.

In one embodiment of the present application, the third frame has a second fixing plate with one end connected to the bottom surface of the third frame, and the other end extending along the second direction.

In one embodiment of the present application, a surface of the second fixing plate facing the third installation position is an inclined surface.

In one embodiment of the present application, the third frame has a body and an installation bracket which are detachably connected.

In one embodiment of the present application, the body has a groove, provided on the outermost side of the third frame along the second direction, wherein the groove is hook-shaped.

In one embodiment of the present application, the fourth frame has a third drainage channel opposite to the fourth installation position along the first direction, wherein the first drainage channel is interconnected with the third drainage channel.

In one embodiment of the present application, the first installation position, the second installation position, the third installation position and the fourth installation position all have a bottom surface and two side surfaces respectively connected to two opposite sides of the bottom surface.

In one embodiment of the present application, the third installation position has a bottom surface and a load-bearing plate with one end connected to the bottom surface.

In one embodiment of the present application, the third frame has a snap fit slot provided on a side surface of the third frame away from the third installation position along the second direction.

Another aspect of the present application also provides a photovoltaic roof tile module, comprising: the above-mentioned photovoltaic profile; and a photovoltaic module, connected to the photovoltaic profile through the installation position.

Another aspect of the present application also provides a photovoltaic roof installation system, comprising: at least two above-mentioned photovoltaic profiles; a photovoltaic module connected to the photovoltaic profile through the installation position; an installation support including an installation plate and a pressing plate arranged opposite to each other, wherein the installation plate is configured to connect to the roof, and the pressing plate presses a third frame and a first frame of an adjacent photovoltaic profile.

In one embodiment of the present application, the installation support futher includes a convex strip with an extending direction the same as an extending direction of the pressing plate, and with one end connected to the installation plate, wherein the convex strip is pressed on the first drainage channel.

In one embodiment of the present application, the installation support further includes a cantilever shape joint with an extension direction of the cantilever shape joint the same as an extension direction of the pressing plate, wherein one end of the cantilever shape joint is connected to the main body of the installation support, and the other end has a protrusion protruding toward the pressing plate hooking the third frame.

In one embodiment of the present application, an extending direction of the installation plate is the same as an extending direction of the pressing plate.

The photovoltaic profile, photovoltaic roof tile component and photovoltaic roof installation system of this application can effectively drain rainwater through the interconnected drainage channels in the photovoltaic frame to avoid rainwater damage to photovoltaic profiles and photovoltaic components. In addition, the photovoltaic profiles are connected in sequence through splicing corners, and the splicing angles have a special angle design, so that the photovoltaic profile of this application has the advantage of simple structure.

### Brief Description of the Drawings

In order to make the above purposes, features and advantages of the present application more obvious and easy to understand, the specific embodiments of the present application are described in detail below with reference to the accompanying drawings, wherein:
Fig. 1A is a three-dimensional schematic view of a photovoltaic profile according to an embodiment of the present application;
Fig. 1B is a schematic top view of the photovoltaic profile in Fig. 1A;
Fig. 2 is a partial enlarged view of part A of the rectangular frame in Fig. 1B;
Fig. 3A is a schematic top view of the first frame according to an embodiment of the present application;
Fig. 3B is a schematic cross-sectional view of the first frame in Fig. 3A;
Fig. 3C is a schematic cross-sectional view of the first frame according to another embodiment of the present application;
Fig. 4A is a schematic top view of the second frame according to an embodiment of the present application;
Fig. 4B is a schematic cross-sectional view of the second frame in Fig. 4A;
Fig. 4C is a schematic cross-sectional view of the second frame according to another embodiment of the present application;
Fig. 5A is a schematic top view of the third frame according to an embodiment of the present application;
Fig. 5B is a schematic cross-sectional view of the third frame in Fig. 5A;
Fig. 5C is a schematic cross-sectional view of the third frame according to another embodiment of the present application;
Fig. 5D is a schematic cross-sectional view of the third frame according to an embodiment of the present application;
Fig. 6A is a schematic top view of the fourth frame according to an embodiment of the present application;
Fig. 6B is a schematic cross-sectional view of the fourth frame in Fig. 6A;
Fig. 6C is a schematic cross-sectional view of the fourth frame according to another embodiment of the present application;
Fig. 7A is a schematic cross-sectional view of the first frame and the third frame after overlapping in an embodiment of the present application;
Fig. 7B is a schematic cross-sectional view of the second frame and the fourth frame after overlapping in an embodiment of the present application;
Fig. 7C is a schematic cross-sectional view along B-B in Fig. 1B;
Fig. 7D is a schematic cross-sectional view along C-C in Fig. 1B;
Fig. 8 is a schematic top view of a photovoltaic profile according to another embodiment of the present application;
Fig. 9 is a schematic side view of a photovoltaic roof installation system according to an embodiment of the present application;
Fig. 10A is a partial enlarged view of the circular frame portion in Fig. 9;
Fig. 10B is a schematic side view of the first frame and the third frame after overlapping according to an embodiment of the present application;
Fig. 10C is a schematic side view of the first frame and the third frame after overlapping according to another embodiment of the present application;
Fig. 11A shows a schematic front view of the installation support in Fig. 9;
Fig. 11B is a schematic front view of the installation support according to an embodiment of the present application;
FIG. 11C is a schematic front view of an installation support according to another embodiment of the present application.

### The reference signs in drawings:

| | | | |
|---|---|---|---|
| closed area | 10 | third frame | 130 |
| photovoltaic module | 20 | third splicing corner | 131 |
| step | 30 | third installation position | 132 |
| roof | 40 | corner brace installation cavity | 133 |
| photovoltaic profile | 100 | snap fit slot | 134 |
| first frame | 110 | second fixing plate | 135 |
| first splicing corner | 111 | second overlapping plate | 136 |
| first installation position | 112 | body | 137 |
| first drainage channel | 113 | groove | 137a |
| corner brace installation cavity | 114 | installation bracket | 138 |
| first fixing plate | 115 | snap fit structure | 139 |
| first overlapping plate | 116 | fourth frame | 140 |
| pressing plate | 117 | fourth splicing corners | 141 |

| | | | |
|---|---|---|---|
| second frame | 120 | fourth installation position | 142 |
| second splicing corner | 121 | corner brace installation cavity | 143 |
| second installation position | 122 | cover plate | 144 |
| second drainage channel | 123 | vertical plate | 145 |
| corner brace installation cavity | 124 | third drainage channel | 146 |
| corner brace | 150 | pressing plate | 232 |
| installation support | 160 | convex strip | 233 |
| installation plate | 161 | main body | 234 |
| pressing plate | 162 | cantilever shape joint | 235 |
| waterproof sealing strip | 170 | protrusion | 236 |
| photovoltaic profile | 211 212 213 | waterproof sealing strip | 240 |
| photovoltaic module | 221, 222,223 | connection structure | 251, 252 |
| installation support | 230 | install keel | 260 |
| installation plate | 231 | | |

### Preferred Embodiment of the Present Application

In order to make the above objects, features and advantages of the present application more obvious and understandable, the specific embodiments of the present application are described in detail below with reference to the accompanying drawings.

Many specific details are set forth in the following description to fully understand the present application, but the present application can also be implemented in other ways different from those described here, so the present application is not limited by the specific embodiments disclosed below.

As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

Next, the photovoltaic profile and photovoltaic roof installation system of the present application will be described through specific embodiments.

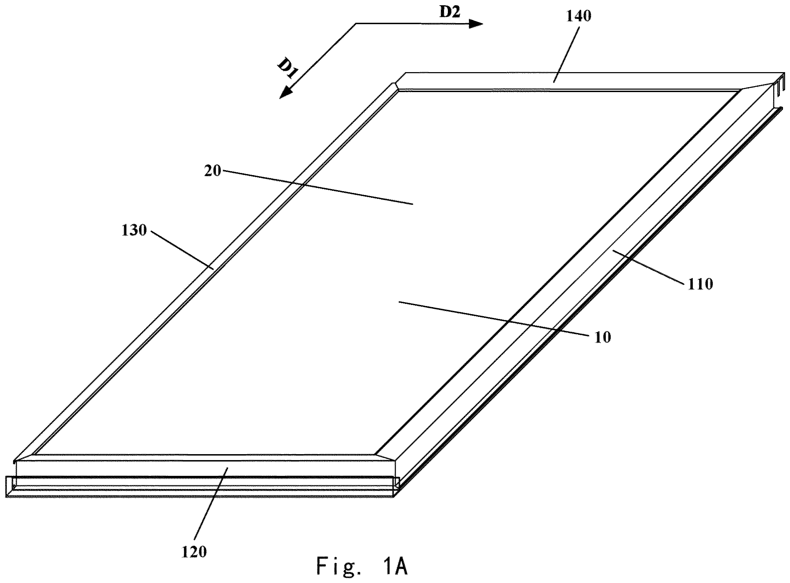

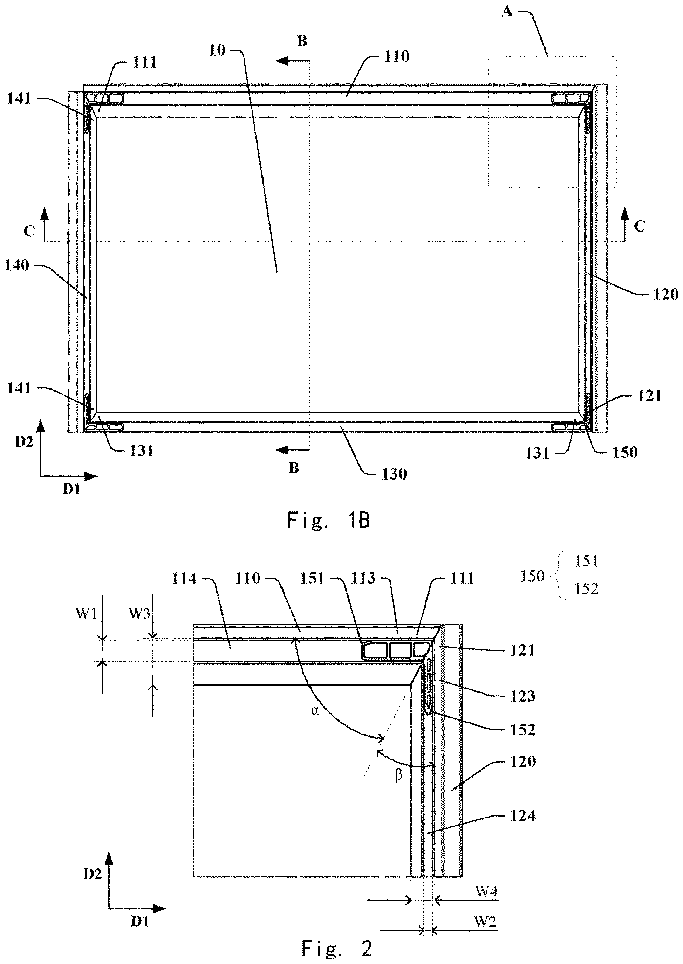

Fig. 1A is a schematic three-dimensional view of a photovoltaic profile according to an embodiment of the present application, and Fig. 1B is a schematic top view of the photovoltaic profile in Fig. 1A. Referring to Fig. 1A and Fig. 1B, the photovoltaic profile 100 comprises a first frame 110, a second frame 120, a third frame 130 and a fourth frame 140. Each frame is connected end to end to form a closed area 10. Through the above frames, the photovoltaic modules 20 can be installed in a closed area.

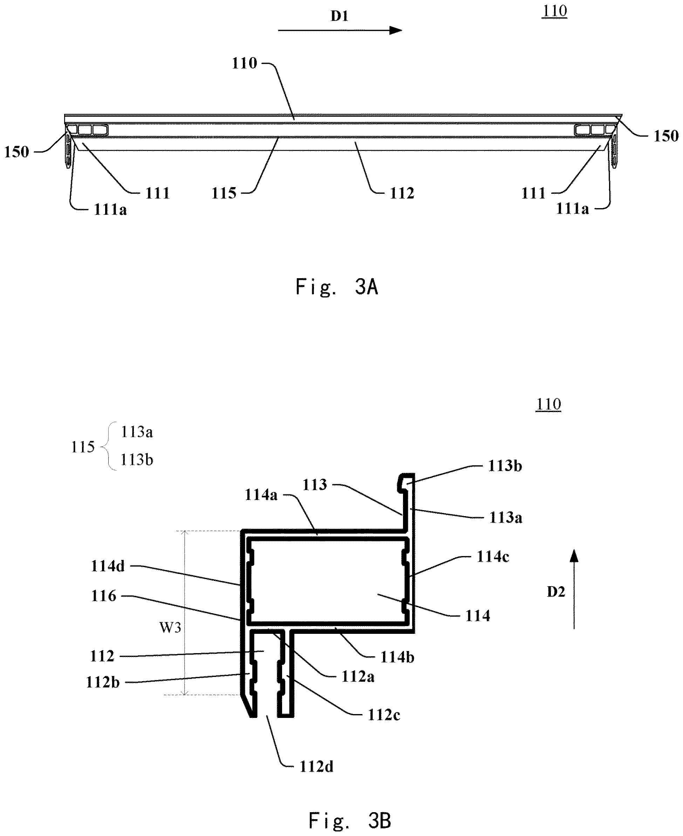

Specifically, refer to the schematic top view of the first frame shown in Fig. 3A and the schematic cross-sectional view of the first frame in Fig. 3A on a plane perpendicular to the first direction D1 shown in Fig. 3B. The first frame 110 extends along the first direction D1, and two opposite ends along the first direction D1 respectively have corresponding first splicing corners 111. As shown in Fig. 3A, each of the two first splicing corners 111 has a bevel 111a. Combining with the partial enlarged view of the rectangular frame A in Fig. 1B shown in Fig. 2, the first splicing corner 111 have a splicing angle α which is the angle between the bevel 111a and the straight line parallel to the first direction D1, and the splicing angle α is greater than 45° and less than 90°. The first splicing corner on the left side of the first frame 110 in Fig. 1B also has a splicing angle α.

As shown in Fig. 3B, the first frame 110 has a first installation position 112 and a first drainage channel 113 opposite to each other along the second direction D2, and the first installation position 112 and the first drainage channel 113 are respectively adjacent to two opposite sides (114a and 114b) of the corner brace installation cavity 114 along the first direction D1. As shown in Fig. 3A, the corner brace installation cavity 114 can be used to install the corner brace 150. It should be noted that the corner brace 150 in Fig. 3A is not part of the first frame 110, this notion also applies to what follows, and will not be described again.

The first installation position 112 has a bottom surface 112a, a side surface 112b and a side surface 112c, the side surfaces 112b and 112c are arranged oppositely and are respectively connected to the bottom surface 112a, forming an opening 112d. As shown in Fig. 1B, the opening 112d faces the third frame 130. The opening 112d may be used for installing photovoltaic laminates.

The first drainage channel 113 has a bottom surface 113a, one end of which is connected to a bottom surface 114c of the first frame, and the other end of which extends away from of the first installation position 112. The bottom surface 114c is also the bottom surface of the corner brace installation cavity 114. A protrusion 113b is provided at an end of the bottom surface 113a away from the corner brace installation cavity 114. The bottom surface 113a, the protrusion 113b and a side surface 114a of the corner brace installation cavity 114 together form the first drainage channel 113. In addition, the bottom surface 113a and the protrusion 113b also function as a fixing plate. When a photovoltaic profile is installed on the roof, a fixing piece is used to connect the fixing plate and the roof. Specifically, as shown in Fig. 3B, the bottom surface 113a and the protrusion 113b together form the first fixing plate 115.

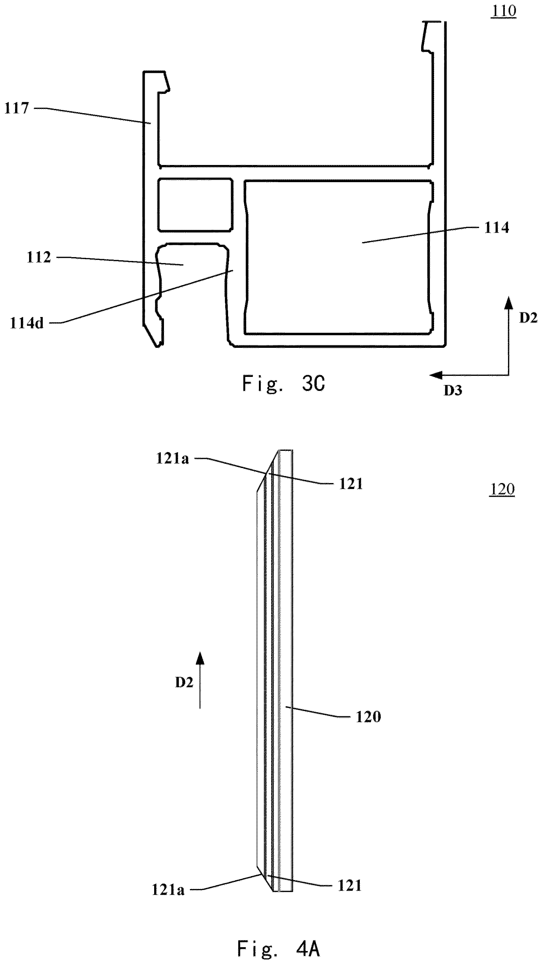

The first frame of the present application can also be implemented as the structure in Fig. 3C.

Referring to the schematic cross-sectional view of the first frame of an embodiment shown in Fig. 3C, what is different from the first frame in Fig. 3B is that the first installation position 112 is located on the left side of the corner brace installation cavity 114 along the third direction D3, and the top surface 114d of the code installation cavity 114 also serves as a side surface of the first installation position 112.

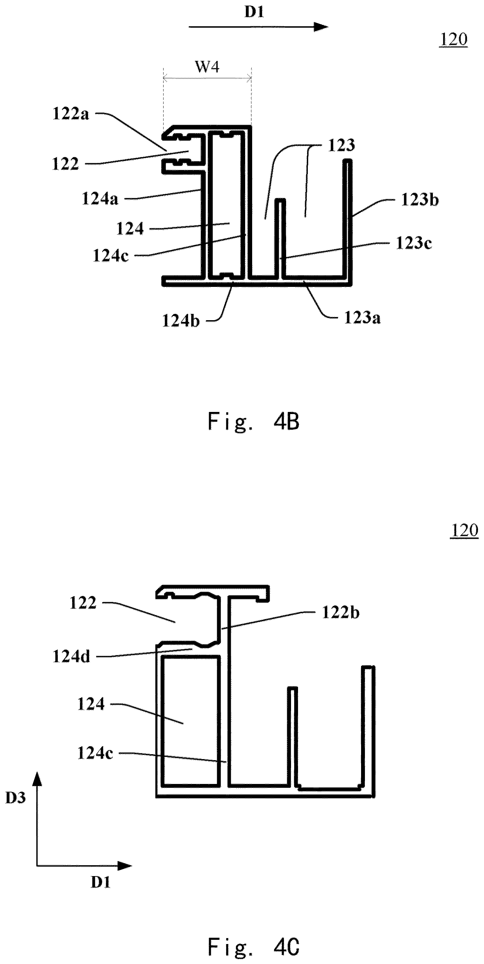

Fig. 4A is a schematic top view of the second frame of an embodiment, and Fig. 4B is a schematic cross-sectional view of the second frame in Fig. 4A on a plane perpendicular to the second direction D2. Referring to Fig. 4A, corresponding second splicing corner portions 121 are provided at opposite ends of the second frame 120 along the second direction D2, wherein each second splicing corner 121 has a bevel 121a. As shown in Fig. 2, the second splicing corner 121 has a splicing angle β which is the angle between the bevel 121a and a straight line parallel to the second direction D2, and the splicing angle β is greater than 0° and less than 45°. The second splicing corner below the second frame 120 in Fig. 1B also has a splicing angle β.

The relationship between the splicing angle α and the splicing angle β will be explained here. As shown in Fig. 2, the first splicing corner 111 on the right side of the first frame 110 is connected to the adjacent second splicing corner 121 in the second frame 120 with a corner brace, for example. As shown in Fig. 3A and Fig. 4A, the bevel 111a of the first splicing corner 111 and the bevel 121a of the second splicing corner 121 have the same length and mutually fit. Preferably, after the bevel 111a and the bevel 121a are attached together, the sum of the splicing angle α and the splicing angle β is 90°. It should be understood that the sum of the splicing angle α and the splicing angle β may also be 90±5°.

Next, referring to Fig. 4B, the second frame 120 also has a second installation position 122 and a second drainage channel 123 opposite to each other along the first direction D 1. The second installation position 122 is provided on the side wall 124a of the corner brace installation cavity 124 and is away from the bottom surface 124b of the corner brace installation cavity 124. The structure of the second installation position 122 is similar to that of the above-mentioned first installation position, both of which are groove-shaped structures. As shown in Fig. 1B, the second installation position 122 has an opening 122a facing the fourth frame 140, and the opening 122a can be used to connect to a photovoltaic module. For other descriptions about the second installation position 122, please refer to the previous description of the first installation position.

The bottom surface 123a of the second drainage channel 123 is adjacent to the bottom surface 124b of the corner brace installation cavity 124, and the end of the bottom surface 123a away from the corner brace installation cavity is connected to the side wall 123b. A side wall 123c is provided between the side wall 123b and the corner brace installation cavity 124 along the second direction D1, thus forming two adjacent second drainage channels 123. It can be understood that the number of the second drainage channels 123 can be increased or decreased based on Fig. 4B.

The second frame of the present application can also be implemented as the structure in Fig. 4C.

Referring to the schematic cross-sectional view of the second frame of an embodiment shown in Fig. 4C, what is different from the second frame in Fig. 4B is that the second installation position 122 is adjacent to the corner brace installation cavity 124 along the third direction D3, and the bottom surface 122b of the installation position 122 is formed by a side surface 124c of the corner brace installation cavity 124 extending upward along the third direction D3. The top surface 124d of the corner brace installation cavity 124 is also implemented as a side surface of the second installation position 122.

Referring to Fig. 2, in some embodiments, the connection method of the first frame 110 and the second frame 120 includes using a corner brace 150 to connect the first splicing corner 111 and the adjacent second splicing corner 121. Specifically, the corner brace 150 has a first plug 151 and a second plug 152, and one end of the first plug 151 is connected to one end of the second plug 152. As shown in Fig. 2 and Fig. 3B, the first plug 151 is inserted into the corner brace installation cavity 114 of the first frame 110; as shown in Fig. 2 and Fig. 4B, the second plug 152 is inserted into the corner brace installation cavity 124 of the second frame 120. In this way, the connection between the first frame 110 and the second frame 120 is achieved.

In Fig. 1B and Fig. 2, the corner brace are shown for convenience of explanation. It should be understood that because the corner braces are arranged inside the corner brace installation cavity, in actual situations the corner brace located in the corner brace installation cavity cannot be observed from the outside of the photovoltaic profile.

Continuing to refer to Fig. 2, the size W1 of the corner brace installation cavity 114 of the first frame 110 along the second direction D2 is larger than the size W2 of the corner brace installation cavity 124 of the second frame 120 along the first direction D1, and W1=W2× tanα. Referring to Fig. 2 and Fig. 3B, the distance between the opening 112d and the side wall 114a along the second direction D2 is W3, and referring to Fig. 2 and Fig. 4B, the distance between the opening 122a and the side wall 124c along the first direction D1 is W4, and the distance W3 and the distance W4 have the following relationship: W3=W4×tanα.

As shown in Fig. 2, the first drainage channel 113 of the first frame 110 and the second drainage channel 123 of the second frame 120 are connected at the connection position between the two frames, and the rainwater in the first drainage channel 113 flows through the second drainage channel 123 and then is drained from the photovoltaic profile.

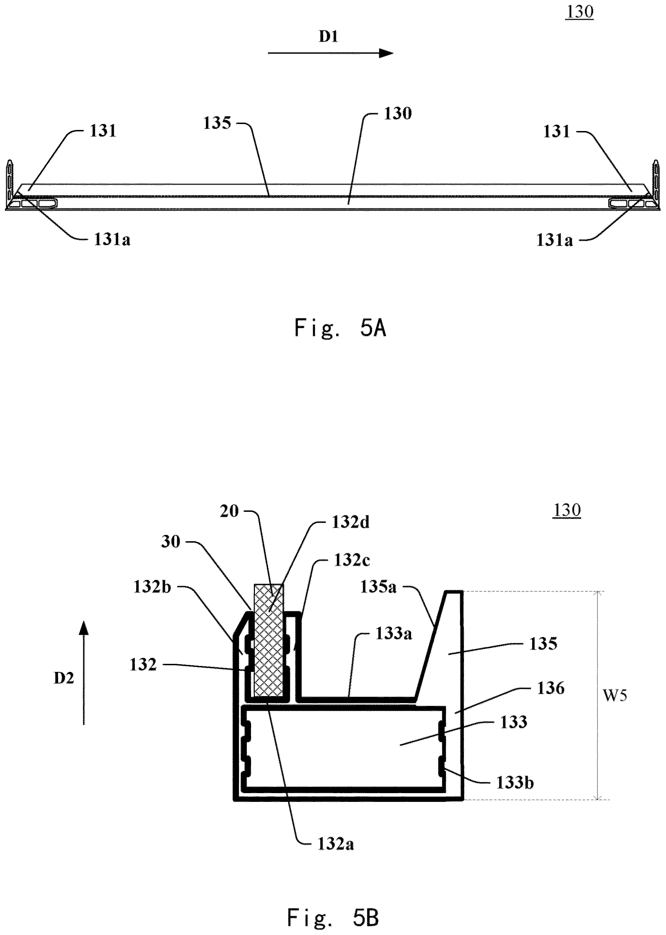

Fig. 5A is a schematic top view of the third frame of an embodiment, and Fig. 5B is a schematic cross-sectional view of the third frame in Fig. 5A on a plane perpendicular to the first direction D1. Referring to Fig. 5A, corresponding third splicing corners 131 are provided at opposite ends of the third frame 130 along the first direction D1, and each third splicing corner 131 has a bevel 131a. As shown in Fig. 1B, Fig. 2 and Fig. 5A, similar to the connection method between the first frame 110 and the second frame 120, the second splicing corner 121 of the second frame 120 close to the third frame 130 is spliced with the adjacent third splicing corner 131. In this way, the connection between the second frame 120 and the third frame 130 is achieved. In some embodiments, corner brace 150 may be used to connect the second frame 120 and the third frame 130.

Referring to Fig. 5B, the third frame 130 has a second fixing plate 135, one end of which is connected to the bottom surface 133b of the corner brace installation cavity 133, and the other end of which extends along the second direction D2. The bottom surface 133b is also the bottom surface of the corner brace installation cavity 133. The second fixing plate 135 is used to fix the third frame, details of which will be described later.

Referring to Fig. 2, the splicing angle α of the first frame 110 is greater than the splicing angle β of the second frame 120. The technical effects of the relationship between the splicing angles will be described here.

First, as shown in Fig. 3A and Fig. 3B, the first frame 110 has a first overlapping plate 116. As shown in Fig. 3B, the first overlapping plate 116 includes a top surface 114d of the corner brace installation cavity 114 and a side surface 112b of the first installation position 112. Referring to Fig. 5A and Fig. 5B, the third frame 130 has a second overlapping plate 136. Referring to Fig. 5B, the second overlapping plate 136 includes a second fixing plate 135 and a bottom surface 133a. In other words, the second fixing plate 135 and the bottom surface 133a are jointly implemented as the second overlapping plate 136.

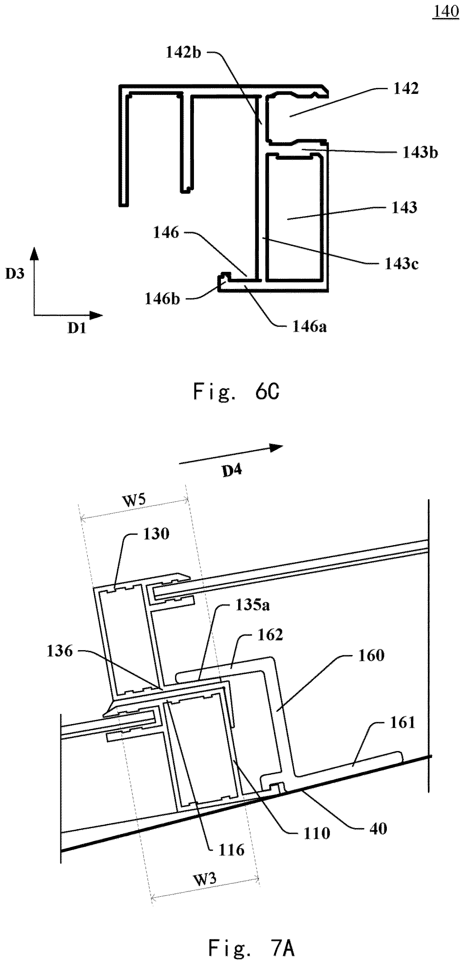

Next, referring to the schematic cross-sectional view of the first frame and the third frame after overlapping in an embodiment shown in Fig. 7A. In this embodiment, two photovoltaic profiles are laid on a roof 40 with a slope, wherein the third frame 130 of the right photovoltaic profile is located above the first frame 110 of the left photovoltaic profile. The second overlapping plate 136 of the third frame 130 overlaps at the first overlapping plate 116 of the first frame 110. Referring to Fig. 3B, the size of the surface of the first overlapping plate 116 away from the corner brace installation cavity 114 along the second direction D2 is W3, referring to Fig. 5B, the size of the second overlapping plate 136 along the second direction D2 is W5, and the size W3 is equal to the size W5. As shown in Fig. 3B, Fig. 5B and Fig. 7A, when overlapping the first frame 110 and the second frame 130, the first overlapping plate 116 and the second overlapping plate 136 overlap to ensure stability between adjacent photovoltaic profiles.

It can be seen from the above description that the first overlapping plate 116 of the first frame 110 is covered by the second overlapping plate 136 of the third frame 130 and cannot be observed. Returning to Fig. 2, by setting the splicing angle α to be greater than the splicing angle β, the size W3 of the first overlapping plate 116 is increased, while the visible size of the second frame 120 is reduced. Although the size W3 of the first overlapping plate 116 is increased, since the first overlapping plate 116 is covered by the second overlapping plate 136, increasing the size W3 of the first overlapping plate 116 has a smaller impact on the aesthetics of the photovoltaic profile, while reducing the visible size of the second frame 120 improves the aesthetics of the photovoltaic profile.

Referring to Fig. 5B, in one embodiment, the surface 135a of the second fixing plate 135 facing the third installation position 132 is an inclined surface, and the inclined surface is inclined downward along the second direction D2. Referring to Fig. 7A concurrently, when overlapping adjacent photovoltaic profiles, the installation support 160 is used to fix the two overlapped photovoltaic profiles. The installation support 160 has an installation plate 161 and a pressing plate 162 which are oppositely arranged, wherein the installation plate 161 is used to connect to the roof 40, the pressing plate 162 presses on the surface 135a of the third frame 130 and exerts a pressure on the third frame 130 toward the first frame 110. In this way, the effect of pressing the first frame 110 and the third frame 130 of an adjacent photovoltaic profile through the installation support 160 is achieved. Setting the surface 135a as an inclined surface helps push the third frame 130 into the gap between the pressing plate 161 and the first overlapping plate 116 along the slope direction D4 of the roof.

Referring to Fig. 5B, the third frame 130 further has a third installation position 132. In Fig. 5B, the third installation position 132 has a bottom surface 132a, a side surface 132b and a side surface 132c. The bottom surface 132a coincides with a side surface 133a of the corner brace installation cavity 133, and the side surfaces 132b and 132c are oppositely arranged to form an opening 132d. When connecting the photovoltaic module and the photovoltaic profile, one side of the photovoltaic module 20 is inserted into the space between the side surfaces 132b and 132c through the opening 132d.

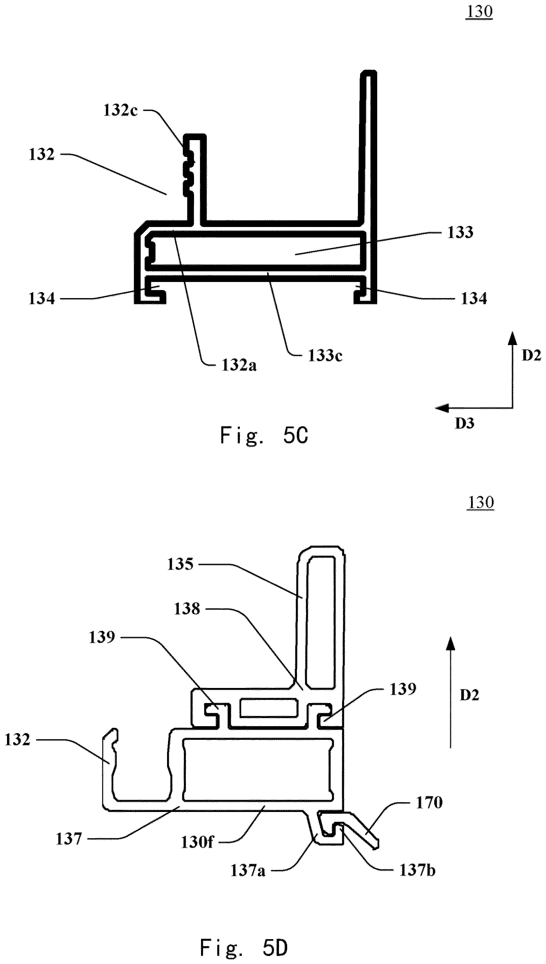

The third installation position 132 is not limited to the structure in Fig. 5B. Referring to the schematic cross-sectional view of the third frame in another embodiment shown in Fig. 5C, the difference between Fig. 5C and Fig. 5B is that the third installation position 132 in Fig. 5C is implemented as an installation corner, which removes the side surface 132b in Fig. 5B, and retaining the bottom surface 132a and the side surface 132c. One end of the bottom surface 132a is connected to one end of the side surface 132c to form an installation corner. When the photovoltaic module is connected to the third installation position 132, the side surface 132c is used as a load-bearing plate for carrying the photovoltaic module. In Fig. 5B, there is a step 30 between the side surface 132b and the photovoltaic module 20, and there is a problem of dust accumulation at the step 30. Fig. 5C removes the side 132b in Fig. 5B to avoid dust accumulation.

In addition, another difference between Fig. 5C and Fig. 5B is that the third frame 130 in Fig. 5C has a snap fit slot 134. As shown in Fig. 5C, two snap fit slots 134 are provided oppositely at both ends of the side surface 133c of the corner brace installation cavity 133 along the third direction D3. The snap fit slots 134 can be used to connect with a baffle which can function as an apron flashing and has an aesthetics effect.

The third frame of the present application can also be implemented as the structure in Fig. 5D.

Referring to the schematic cross-sectional view of the third frame of an embodiment shown in Fig. 5D, what is different from the third frame in Fig. 5B and Fig. 5C is that the third frame 130 in Fig. 5D includes a body 137 and an installation bracket138. As shown in Fig. 5D, the body 137 and the installation bracket138 are connected through a snap-fit structure 139 which can realize the detachable connection between the body 137 and the installation bracket138. It can be understood that the body 137 and the installation bracket138 can also be connected in other ways. The third installation position 132 is provided on the body 137, and the second fixing plate 135 is provided on the installation bracket 138. The processing of the third frame is facilitated by implementing the third frame as a combined frame composed of the body and the installation bracket.

Continuing to refer to Fig. 5D, the body 137 has groove 137aGroove which is provided on the side surface 130f. The groove 137a is hook-shaped, and an opening is formed between a free end 137b of the hook-shaped structure and the side surface 130f. One end of a waterproof sealing strip 170 can be disposed in the groove 137a through the above-mentioned opening.

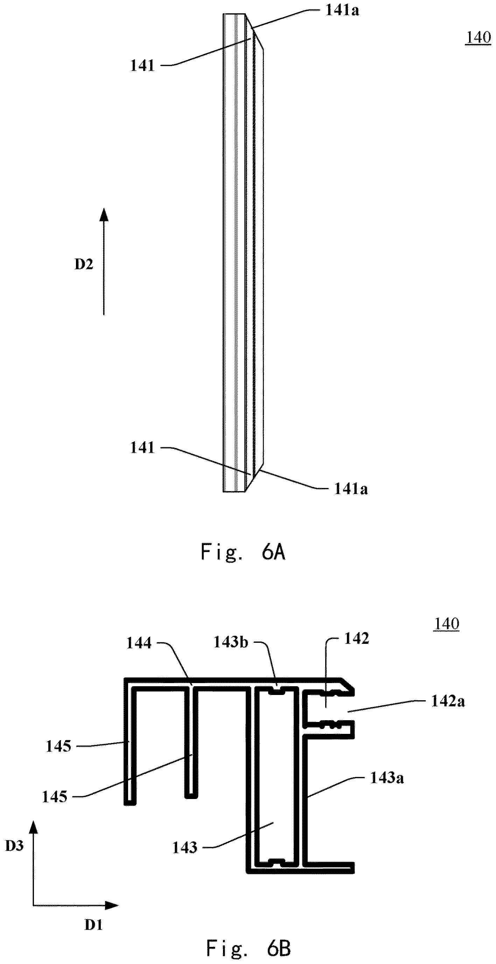

Fig. 6A is a schematic top view of the fourth frame in an embodiment, and Fig. 6B is a schematic cross-sectional view of the fourth frame in Fig. 6A on a plane perpendicular to the second direction D2. Referring to Fig. 6A,at the two opposite ends of the fourth frame 140 along the second direction D2 are provided with corresponding fourth splicing corners 141, and each fourth splicing corner 141 has a bevel 141a.

As shown in Fig. 1B and Fig. 6A, the two fourth splicing corners 141 opposite to each other along the second direction D2 of the fourth frame 140 are respectively connected with the first splicing corner 111 on the left side of the first frame 110 and the third splicing corner 131 on the left side of the third frame 130. As shown in Fig. 3A, Fig. 5A and Fig. 6A, after splicing, the two opposite bevels 141a of the fourth frame 140 along the second direction D2 respectively fit with the bevel 111a on the left side of the first frame 110 and the bevel 131a on the left side of the third frame 130. The bevel of the third frame 130 and the bevel of the fourth frame 140 have the previously described characteristics regarding the splicing angle α and the splicing angle β, which will not be described again here.

Referring to Fig. 6B, the fourth frame 140 has a fourth installation position 142, the structure of which is similar to that of the first installation position and has an opening 142a. The photovoltaic module can be inserted into the fourth installation position 142 through the opening 142a. The fourth installation position 142 is adjacent to a side 143a of the corner brace installation cavity 143, and combining with what is shown in Fig. 1B, the opening 142a faces the second frame 120. For other descriptions about the fourth installation position 142, please refer to the previous descriptions of the first installation position, the second installation position and the third installation position.

Continuing to refer to Fig. 6B, in one embodiment, the fourth frame 140 has a cover plate 144 opposite to the fourth installation position 142 along the first direction D1. One end of the cover plate 144 is connected to the top surface 143b of the corner brace installation cavity 143, and the other end extends away from the fourth installation position 142. In some embodiments, the fourth frame 140 has a plurality of vertical plates 145 extending along the third direction D3, and one end of each vertical plates 145 is connected to the cover plate 144.

The fourth frame of the present application can also be implemented as the structure in Fig. 6C.

Referring to the schematic cross-sectional view of the fourth frame shown in Fig. 6C, the fourth frame 140 in Fig. 6C has the following differences from Fig. 6B. The fourth installation position 142 is adjacent to the corner brace installation cavity 143 along the third direction D3. The bottom surface 142b of the fourth installation position 142 is formed by the side surface 143c of the corner brace installation cavity 143 extending upward along the third direction D3, and the top surface 143b of the corner brace installation cavity 143 is also implemented as a side surface of the fourth installation position 142. The fourth frame 140 has a third drainage channel 146 opposite to the fourth installation position 142 along the first direction D1. One end of the bottom surface 146a of the third drainage channel 146 is connected to a side surface 143c of the corner brace installation cavity 143, and the other end extends away from the side 143c. A protrusion 146b protruding along the third direction D3 is provided at the other end of the bottom surface 146a. The bottom surface 146a, the protrusion 146b and the side surface 143c form the third drainage channel 146.

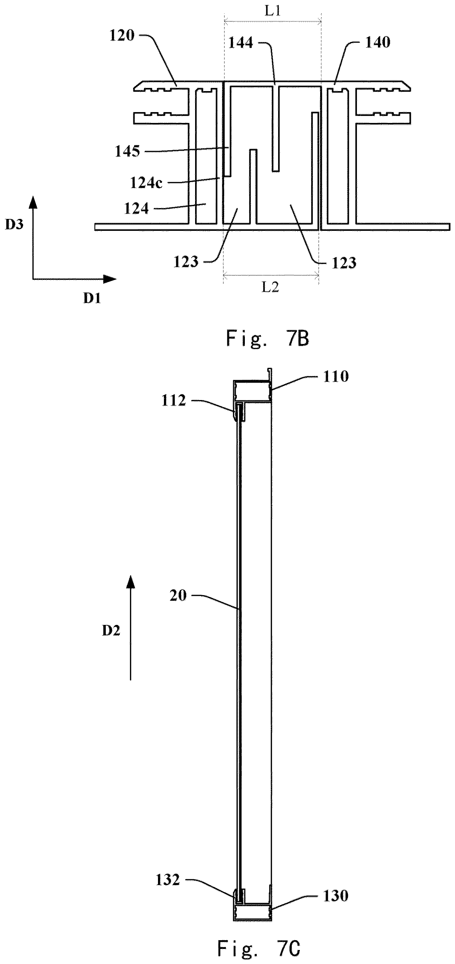

Fig. 7B is a schematic cross-sectional view of the second frame and the fourth frame after overlapping in an embodiment. Referring to Fig. 7B, the fourth frame 140 overlaps the second frame 120 along the third direction D3, and the cover plate 144 of the fourth frame 140 covers the second drainage channel 123 of the second frame 120, wherein the size L1 of the cover plate 144 along the first direction D1 is equal to the size L2 of the second drainage channel along the first direction D1. As shown in Fig. 7B, the vertical plate 145 of the fourth frame 140 fits the side surface 124c of the corner brace installation cavity 124 of the second frame 120. However, due to factors such as production technology and photovoltaic profile installation errors, there may be a gap between the vertical plate 145 and the side surface 124c, and rainwater on the surface of the photovoltaic module may penetrate into the photovoltaic profile through the gap, thereby damaging the photovoltaic profile. The second drainage channel 123 in the second frame 120 of the present application can drain the rainwater that penetrates through the gap, thereby preventing the photovoltaic profile from being damaged.

As shown in Fig. 1B and Fig. 2, the first plug 151 and the second plug 152 of the corner brace 150 are respectively inserted into the corner brace installation cavity 114 at the first splicing corner 111 and the corner brace installation cavity 124 at the second splicing corner 121. In this way, the connection between the first splicing corner and the second splicing corner is achieved. Referring to Fig. 1B, similar to the above connection method, the second frame 120 and the third frame 130, the third frame 130 and the fourth frame 140, and the fourth frame 140 and the first frame 110 can be connected through the corner brace 150. In this way, the four frames are connected end to end in sequence. It should be noted that the connection method between the frames is not limited to the above method. For example, in some embodiments, the splicing corners of each frame can also be connected through bonding, bolting, welding or other methods.

Referring to Fig. 1B and Fig. 5B concurrently, the opening 132d of the third installation position 132 faces the first frame 110 along the second direction D2. In this way, when the photovoltaic module is installed in the closed area 10, the first installation position 112 of the first frame 110 and the third installation position 132 of the third frame 130 are respectively connected to two opposite sides of the photovoltaic module along the second direction D2.

In the above embodiment, the first frame, the second frame, the third frame and the fourth frame all have installation positions, and when assembling photovoltaic modules and photovoltaic profiles, the installation positions are used to connect the photovoltaic profiles. This will be explained next.

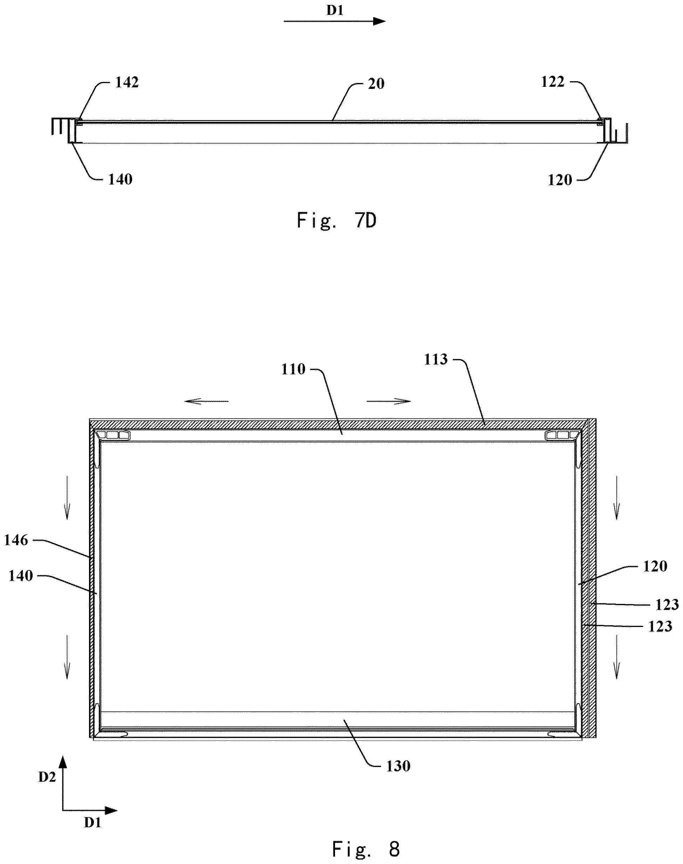

Fig. 7C is a cross-sectional view along B-B in Fig. 1B, and Fig. 7D is a cross-sectional view along C-C in Fig. 1B. Referring to Fig. 1B and Fig. 7C, the first frame 110 and the third frame 130 are arranged oppositely along the second direction D2, the first installation position 112 of the first frame 110 faces the third frame 130, and the third installation position 132 of the third frame 130 faces the first frame 110. With reference to Fig. 3B and Fig. 5B, the opening 112d of the first installation position 112 is opposite to the opening 132d of the third installation position 132. Referring to Fig. 7C, two opposite ends of the photovoltaic module 20 along the second direction D2 are respectively disposed in the first installation position 112 and the third installation position 132.

Next, referring to Fig. 1B and Fig. 7D, the second frame 120 and the fourth frame 140 are arranged oppositely along the first direction D1, the second installation position 122 of the second frame 120 faces the fourth frame 140, and the fourth installation position 142 of the fourth frame 140 faces the second frame 120. Referring to Fig. 4B and Fig. 6B concurrently, the opening 122a of the second installation position 122 is opposite to the opening 142a of the fourth installation position 142. Referring to Fig. 7D, two opposite ends of the photovoltaic module 20 along the first direction D1 are respectively disposed in the second installation position 122 and the fourth installation position 142. In the above manner, the photovoltaic module 20 is fixedly installed in the closed area 10 in Fig. 1B.

Fig. 8 is a schematic top view of a photovoltaic profile according to another embodiment, the difference between Fig. 8 and Fig. 1B is that the cross section of the first frame 110 in Fig. 8 is shown in Fig. 3C, and the cross section of the second frame 120 is shown in Fig. 4C, the cross section of the third frame 130 is shown in Fig. 5D, and the cross section of the fourth frame 140 is shown in Fig. 6C. It can be known from the foregoing description of Fig. 6C that compared with the fourth frame in Fig. 6B, the fourth frame 140 in Fig. 6C has a third drainage channel 146. As shown in Fig. 8, when the first frame 110 and the fourth frame 140 are connected, the first drainage channel 113 of the first frame 110 is interconnected to the third drainage channel 146 of the fourth frame 140. In addition, similar to Fig. 1B, the first drainage channel 113 of the first frame 110 is interconnected with the second drainage channel 123 of the second frame 120. In this way, the two ends of the first drainage channel 113 in Fig. 8 along the first direction D1 are respectively interconnected with the second drainage channel 123 and the third drainage channel 146, this allows the rainwater in the first drainage channel 113 to be discharged through the second drainage channel 123 and the third drainage channel 146. The arrows in Fig. 8 indicate the flow direction of the rainwater.

On the other hand, the present application also proposes a photovoltaic roof tile module. Referring to Fig. 1A, the photovoltaic roof tile module includes the photovoltaic profile and the photovoltaic module 20 as described above. The first frame 110, the second frame 120, the third frame 130 and the fourth frame 140 in the photovoltaic profile are connected in sequence to form a closed area 10, and the photovoltaic module 20 is arranged in the closed area 10. The photovoltaic module 20 can be installed in the closed area 10 by connecting the periphery of the photovoltaic module 20 to the installation positions of each frame. For other explanations about photovoltaic roof tile module, please refer to the previous description of photovoltaic profiles, which will not be elaborated here. The photovoltaic roof tile module in the above embodiments of the present application have the technical effects of being simple in structure, easy to process, and capable of effectively draining rainwater. Another aspect of this application also proposes a photovoltaic roof installation system.

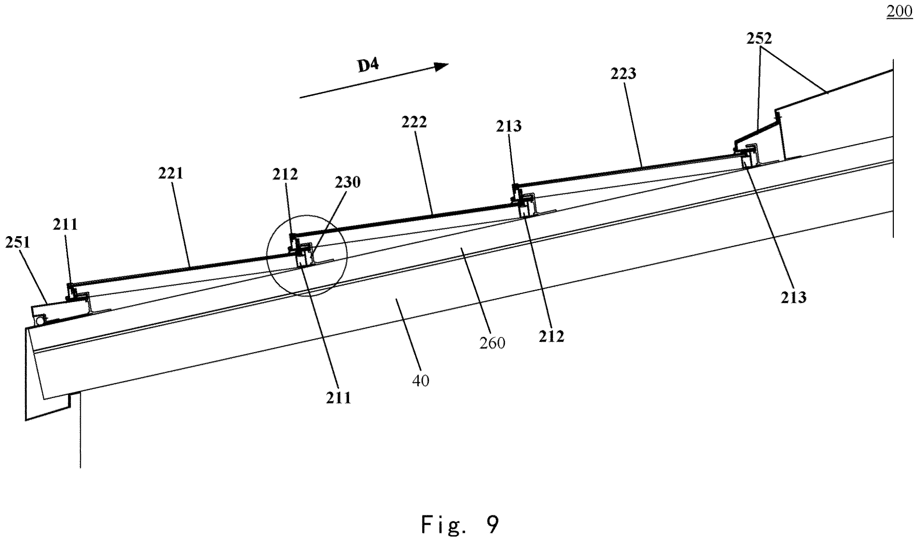

Referring to the schematic side view of the photovoltaic roof installation system in an embodiment shown in Fig. 9, the photovoltaic roof installation system 200 includes at least two photovoltaic profiles, a photovoltaic module and an installation support as described above, wherein the photovoltaic profiles are connected to the periphery of the photovoltaic module, the installation support connects the photovoltaic profiles and the roof.

Specifically, as shown in Fig. 9, three photovoltaic profiles 211, 212 and 213 are laid on the roof 40 in sequence along the slope direction D4 of the roof, and the positions of the photovoltaic profiles 211, 212 and 213 in the vertical direction are sequentially increased. The three photovoltaic modules 221, 222 and 223 are connected to the photovoltaic profiles 211, 212 and 213 respectively, the photovoltaic profiles are connected to the roof 40 through the installation supports 230, and the outermost photovoltaic profiles 211 and 213 are also connected to the roof 40 through the connecting structures 251 and 252 respectively. In some embodiments, the photovoltaic modules 221, 222, and 223 include a photovoltaic laminate and a laminate frame for fixing the photovoltaic laminate, and through the laminate frames the photovoltaic modules can be connected to the photovoltaic profiles. In some other embodiments, the photovoltaic roof installation system further includes an install keel 260. The install keel 260 is installed on the roof 40, and the photovoltaic profile is fixed on the install keel 260 through the installation support 230.

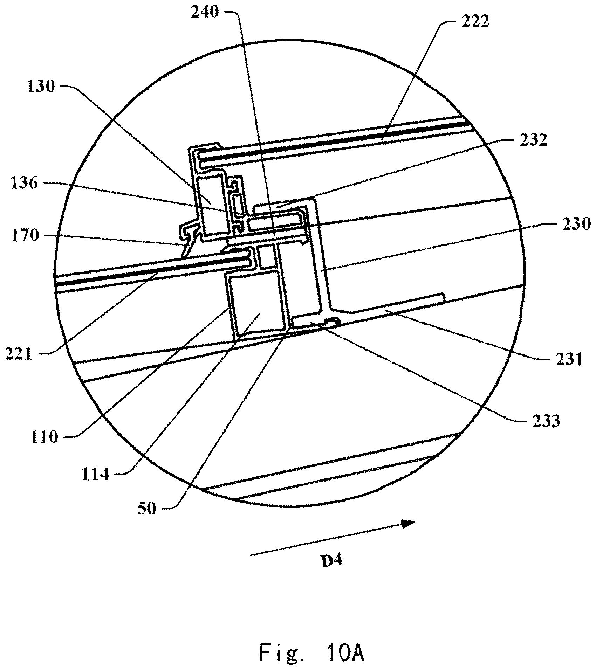

The overlapping method between adjacent photovoltaic profiles along the slope direction D4 is as follows. Referring to Fig.9 and the partial enlarged view of the circular frame part in Fig. 9 shown in Fig. 10A, the third frame 130 of the photovoltaic profile 212 is pressed on the first frame 110 of the photovoltaic profile 211. The installation plate 231 of the installation support 230 is connected to the roof 40, for example through bolts. The pressing plate 232 of the installation support 230 is pressed against the second overlapping plate 136 of the third frame 130, the pressing plate 232 exerts pressure on the second overlapping plate 136 toward the roof 40, thus achieving the effect of pressing the first frame 110 and the third frame 130.

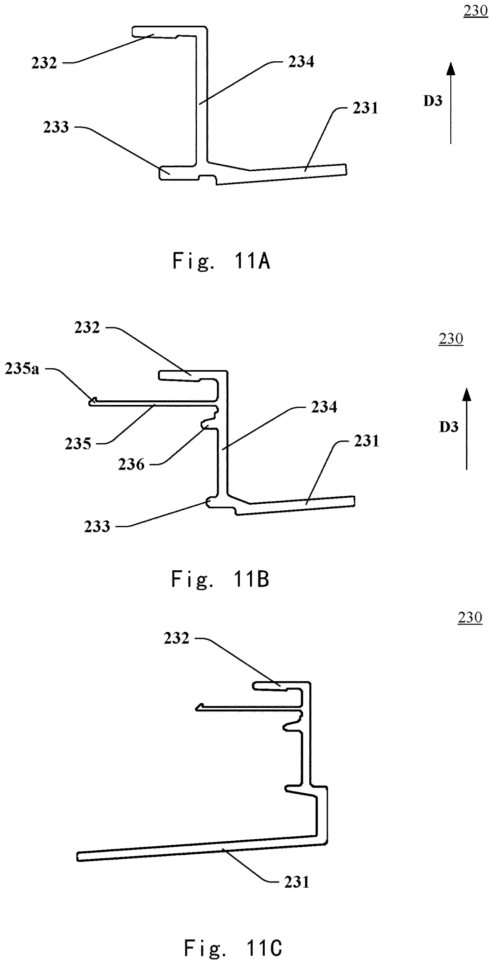

Fig. 11A shows a schematic front view of the installation support in Fig. 9. Referring to Fig. 11, the installation plate 231 and the pressing plate 232 are arranged oppositely along the third direction D3, and are connected through the main body 234 of the installation support. The installation support 230 also includes a convex strip 233, one end of the convex strip 233 being connected to the installation edge 232, and the extending direction of the other end of the convex strip 233 being the same as the extending direction of the pressing plate 232. As shown in Fig. 3B and Fig. 10A, the convex strip 233 are pressed against the first drainage channel 113 of the first frame 110. In this way, the stability of the connection between the photovoltaic profile and the roof can be increased. As shown in Fig. 10A, there is a gap 50 between the convex strip 233 and the corner brace installation cavity 114, therefore, the pressing of the convex strip 233 on the first drainage channel 113 will not affect the drainage function of the first drainage channel 133.

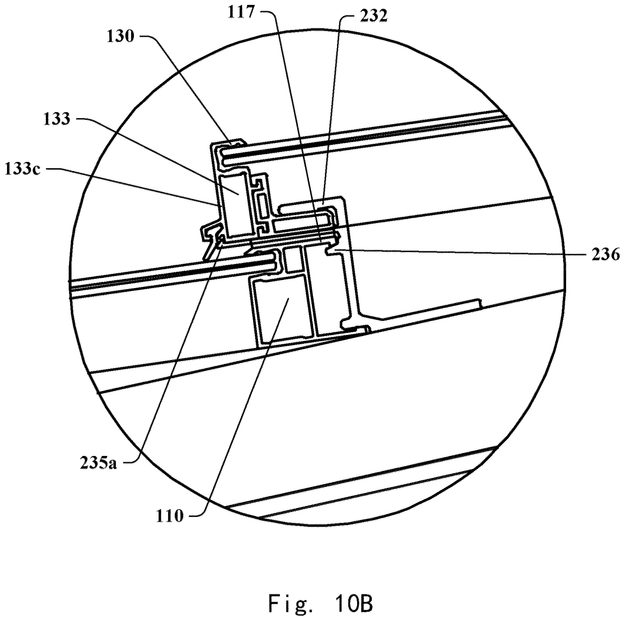

The installation support of the present application can also be implemented as the installation support shown in Fig. 11B. Referring to Fig. 11B, the same structures in the installation support 230 as those in Fig. 11A are labeled with the same reference numbers. For related descriptions, please refer to the description of Fig. 11A and will not be further elaborated. The difference between Fig. 11B and Fig. 11A is that the installation support in Fig. 11B also has a cantilever shape joint 235, the extension direction of the cantilever shape joint 235 is the same as the extension direction of the pressing edge 232. one end of the cantilever shape joint 235 is connected to the main body 234, and the other end has a hook 235a facing the pressing plate 232. Fig. 10B shows a schematic side view of connecting a photovoltaic profile to a roof using the installation support in Fig. 11B. As shown in Fig. 10B and Fig. 11B, the hook 235a of the cantilever shape joint 235 hooks the side surface 133c of the corner brace installation cavity 133. In this way, the stability of the connection between the third frame 130 and the roof can be increased.

Referring to Fig. 11B, in some embodiments, the installation support 230 also has a protrusion 236, which is disposed on the main body 234 and protrudes away from the installation edge 231. As shown in Fig. 3C, Fig. 10B and Fig. 11B, the protrusion 236 is in pressing contact with the pressing plate 117 of the first frame 110, and the protrusion 236 exerts pressure on the pressing plate 117 toward the third frame 130. In this way, it is beneficial to improve the stability of the connection between the first frame 110 and the third frame 130.

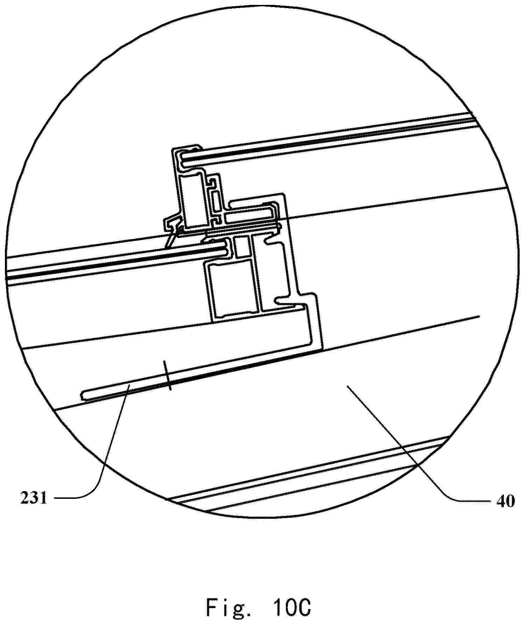

The installation support of the present application can also be implemented as the installation support shown in Fig. 11C. Referring to Fig. 11C, the difference between Fig. 11C and Fig. 11B is that the extending direction of the installation edge 231 is the same as the extending direction of the pressing plate 232. Fig. 10C is a schematic side view of connecting the photovoltaic profile to the roof using the installation support in Fig. 11C. As shown in Fig. 10C and Fig. 11C, the installation plate 231 is installed on the roof 40.

Referring to Fig. 10A, in one embodiment, the photovoltaic profile further includes a waterproof sealing strip 240. Referring to Fig. 3B, the waterproof sealing strip 240 is disposed between the first overlapping plate 116 and the second overlapping plate 136, which helps to prevent rainwater from penetrating into the photovoltaic profile through the gap between the first overlapping plate 116 and the second overlapping plate 136.

Continuing to refer to Fig. 10A, in one embodiment, the photovoltaic profile further includes a waterproof sealing strip 170. Referring to Fig. 5D, the waterproof sealing strip 170 is disposed in the groove 137a of the third frame 130. One end of the waterproof sealing strip 170 is in contact with the light-receiving surface of the photovoltaic module 221, thereby further preventing rainwater from penetrating into the photovoltaic profile through the gap between the first overlapping plate 116 and the second overlapping plate 136. The photovoltaic roof installation system in the above embodiments of the present application has the technical effect of being simple in structure and capable of effectively draining rainwater.

The basic concepts have been described above, obviously, for those skilled in the art, the above disclosure of the application is only an example, and does not constitute a limitation to the present application. Although not expressly stated here, various modifications, improvements and amendments to this application may be made by those skilled in the art. Such modifications, improvements, and amendments are suggested in this application, so such modifications, improvements, and amendments still belong to the spirit and scope of the exemplary embodiments of this application.

Meanwhile, the present application uses specific words to describe the embodiments of the present application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

In some embodiments, numbers describing the quantity of components and attributes are used, it should be understood that such numbers used in the description of the embodiments use the modifiers "about", "approximately" or "substantially" in some examples. Unless otherwise stated, "about", "approximately" or "substantially" indicates that the stated figure allows for a variation of ±20%. Accordingly, in some embodiments, the numerical parameters used in the specification and claims are approximations that can vary depending upon the desired characteristics of individual embodiments. In some embodiments, numerical parameters should take into account the specified significant digits and adopt the general digit reservation method. Although the numerical ranges and parameters used in some embodiments of the present application to confirm the breadth of the scope are approximate values, in specific embodiments, such numerical values are set as precisely as practicable.

## Claims

1. A photovoltaic profile, **characterized by** comprising:
a first frame provided with a first splicing corner at each of two opposite ends along a first direction, and having a first installation position and a first drainage channel opposite to each other along a second direction;
a second frame provided with a second splicing corner at each of two opposite ends along the second direction, and having a second installation position and a second drainage channel opposite to each other along the first direction;
a third frame provided with a third splicing corner at each of two opposite ends along the first direction, and having a third installation position facing the first installation position along the second direction; and
a fourth frame provided with a fourth splicing corner at each of two opposite ends along the second direction, and having a fourth installation position facing the second installation position along the first direction,
wherein the splicing corners of the frames are connected in sequence, and the splicing angles of the first splicing corner and the third splicing corner are both larger than the splicing angles of the second splicing corner and the fourth splicing corner, and the first drainage channel and the second drainage channel are interconnected to each other.

2. The photovoltaic profile according to claim 1, wherein the first frame has a first fixing plate with one end connected to a bottom surface of the first frame and extending away from the first installation position.

3. The photovoltaic profile according to claim 1,wherein the first frame has a first overlapping plate, and the third frame has a second overlapping plate, wherein the size of the first overlapping plate along the second direction is equal to the size of the second overlapping plate along the second direction.

4. The photovoltaic profile according to claim 1, wherein the fourth frame has a cover plate opposite to the fourth installation position along the first direction, wherein the size of the cover plate along the first direction is equal to the size of the second drainage channel along the first direction.

5. The photovoltaic profile according to claim 1, wherein the third frame has a second fixing plate with one end connected to a bottom surface of the third frame, and the other end extending along the second direction.

6. The photovoltaic profile according to claim 5, wherein a surface of the second fixing plate facing the third installation position is an inclined surface.

7. The photovoltaic profile according to claim 5, wherein the third frame has a body and an installation bracket which are detachably connected.

8. The photovoltaic profile according to claim 7, wherein the body has a groove provided on the outermost side of the third frame along the second direction, wherein the groove is hook-shaped.

9. The photovoltaic profile according to claim 1, wherein the fourth frame has a third drainage channel opposite to the fourth installation position along the first direction, wherein the first drainage channel is interconnected with the third drainage channel.

10. The photovoltaic profile according to claim 1, wherein the first installation position, the second installation position, the third installation position and the fourth installation position all have a bottom surface and two side surfaces respectively connected to two opposite sides of the bottom surface.

11. The photovoltaic profile according to claim 1, wherein the third installation position has a bottom surface and a load-bearing plate with one end connected to the bottom surface.

12. The photovoltaic profile according to claim 1, wherein the third frame has a snap fit slot provided on a side surface of the third frame away from the third installation position along the second direction.

13. A photovoltaic roof tile module, **characterized by** comprising:
a photovoltaic profile according to any one of claims 1-12; and
a photovoltaic module connected to the photovoltaic profile through the installation positions.

14. A photovoltaic roof installation system, **characterized by** comprising:
at least two photovoltaic profiles according to any one of claims 1-12;
a photovoltaic module connected to the photovoltaic profile through the installation position;
an installation support including an installation plate and a pressing plate arranged opposite to each other, wherein the installation plate is configured to connect to the roof, and the pressing plate presses a third frame and a first frame of an adjacent photovoltaic profile.

15. The photovoltaic roof installation system according to claim 14, wherein the installation support further includes a convex strip with an extending direction the same as an extending direction of the pressing plate, and with one end of connected to the installation plate, wherein the convex strip is pressed on the first drainage channel.

16. The photovoltaic roof installation system according to claim 14, wherein the installation support further includes a cantilever shape joint with an extension direction the same as an extension direction of the pressing plate, wherein one end of the cantilever shape joint is connected to the main body of the installation support, and the other end has a protrusion protruding toward the pressing plate and hooking the third frame.

17. The photovoltaic roof installation system according to claim 14, wherein an extending direction of the installation plate is the same as an extending direction of the pressing plate.
